# EUROPEAN PATENT SPECIFICATION

(11) **EP 2 902 626 B1**
(45) Date of publication and mention of the grant of the patent: **27.07.2016**
(21) Application number: 14382027.2
(22) Date of filing: 30.01.2014
(51) Int. Cl.: F03G 7/06, B64G 1/22

(54) **Linear actuator device**
Linearbetätigungsvorrichtung
dispositif d'actionnement linéaire

(43) Date of publication of application: 05.08.2015
(73) Proprietor: Arquimea Ingenieria S.L., 28919 Leganes (Madrid) (ES)
(72) Inventor: Nava Rodríguez, Nestor Eduardo, 28919 Leganés (Madrid) (ES); Collado, Marcelo, 28919 Leganés (Madrid) (ES); Cabás, Ramiro, 28919 Leganés (Madrid) (ES)
(74) Representative: Carpintero Lopez, Francisco

(56) References cited:
- EP-A1- 2 587 057
- DE-A1- 3 405 898
- DE-A1- 19 913 048
- DE-C1- 10 231 904
- US-A- 5 771 742
- US-A1- 2010 050 712

## Description

### Technical Field of the Invention

The present invention relates to a linear actuator device which is applicable in the industry of actuator mechanisms for remotely operating elements and appendages, and more specifically in the field of actuators based on non-explosive technologies, and within these actuators in the field of actuators known as HDRM (Hold Down and Release Mechanism) actuators, which allows remotely deploying appendages for application in different sectors, such as in the aerospace, aeronautical, industrial or automotive sectors, all this by means of a compact device that occupies minimal space.

### Background of the Invention

Today there is a wide range of actuator devices which are usually custom-designed depending on their application, being formed as passive systems which allow starting an event by means of the movement of a pin.

These devices include the so-called non-explosive actuator devices which, when compared to explosive devices, have the advantages of being able to be restarted for reuse and of not incorporating hazardous materials, even though their volume/weight ratio and their cost are higher than that of explosive actuator devices. In any case, given their safety conditions, non-explosive actuator devices are widely used today for aerospace applications, such as in satellites, for example.

In the scope of the aerospace industry, most spacecrafts have appendages that are retracted during launch to adapt to the volume available during launch and prevent exposure to the high loads produced during said phase, said appendages subsequently being deployed in their operating position once the spacecraft is in orbit. Two different types of mechanisms, the hold down and release mechanisms (HDRMs) and deployment mechanisms (DMs), are usually used sequentially, one after the other, to achieve these functions.

Hold down and release mechanisms (HDRMs) are in turn standard components for use in spacecrafts for the purpose of achieving a series of critical functions or milestones in a space mission. Their main functions are blocking or holding down appendages during deployment or launch, and releasing them once in orbit or during descent or landing. They are also used to deploy and/or eject appendages or detachable elements in a synchronized manner. On the other hand, deployment mechanisms (DM) are used to allow deploying an appendage, which has already been released from a retracted position to an operating position, all this according to a pre-established sequence of actions. Once the appendage has reached the end position, it is secured in a specific position. There are also applications in which hold down and release mechanisms (HDRM) are not used in combination with deployment mechanisms (DM).

Non-explosive actuator devices include actuators that are commonly known as SMA, i.e., shape memory alloy or material. An example of such actuators is described in United States patent no. US-5771742-A where said SMA material is used as an activator element to trigger the operation of the pin of the device. Compared to the other actuators, actuator devices which incorporate SMA material have better outputs in terms of force, considering their weight and volume. However, these non-explosive actuator devices have a series of limitations in terms of their field of application. In this sense, some devices are limited to very limited ranges of force and movement or have very high power consumptions. On the other hand, there are devices that are large or heavy, which also limits their application. Other devices are only operative in a range of temperatures limited to below 90°C, which prevents using them in the aerospace, aeronautical or automotive sectors where higher operating temperatures are often required.

Document No. DE-3405898-A1, which is considered to be the closest prior art and its features known in combination are placed in the preamble of claim 1, J discloses a shut-off valve comprising a valve housing with a valve seat and an inflow bore, a valve element loaded by a spring, and a rotating element acting on the valve element, in which the rotating element actuating the valve element is provided with a valve cup open towards the valve element and the valve element is guided in a sleeve which is, for its part, guided in the valve cup and loaded axially towards the valve element by a spring, the valve element being connected to the sleeve on the one hand and the sleeve to the valve cup and the housing on the other hand by means of a respective ball catch of which the balls of the catch acting between the valve element and the sleeve are held in holes in the sleeve and can be engaged in and disengaged from a thread groove of the valve element, while the balls of the catch acting between the sleeve, the valve cup and the housing are guided in a curved circumferential slot in the valve cup and engage on the one hand in a spherically cupped recess in the sleeve and, on the other hand, in an axial toothing of the housing which opens into a circumferential groove.

Another example can be found in document No. EP-2587057-A1 wherein a linear actuator device is disclosed, the device comprising a shaft (1) which can be displaced with respect to a casing (3), where said shaft (1) can be located in a first position in which it is actuated by elastic means (4), being maintained immobile by contact with a support element (5) which conveys its load to an intermediate element (6) which in turn conveys its load to an activating element (7); the shaft (1) being able to be located in a second position, in which the activating element (7) is rotated with respect to its position in the first position, such that said intermediate element (6) is housed in a housing (8) which the activating element (7) has, which allows displacing the support element (5) such that the shaft (1) is not in contact with said support element (5).

There is no device to date which includes different, simultaneously optimized variables in relation to volume, degree of technical complexity, cost, precision, reliability, versatility in terms of their applications and actuation capability, particularly considering their main application in the aerospace field.

### Description of the Invention

The present invention relates to a linear actuator device which allows remotely holding down and releasing elements in the field of HDRM actuators by means of a compact device that occupies minimal space and can be easily reset, i.e., can be arranged in its previous position again after use.

The linear actuator device proposed by the invention comprises a pin that can be moved according to an axial direction with respect to a casing in which an inner volume is defined, between a first position, in which it is at least partially housed in the casing, and a second position, in which it is moved out of the casing with respect to its position in the first position by the action of an external force acting on the pin, when the device is in both the first and second positions.

According to the invention, while the pin is actuated by the external force, it remains in the first position through the direct contact between said pin and a first support assembly which transmits its load through direct contact with at least one intermediate transmission element. Said at least one intermediate transmission element in turn transmits its load through direct contact with a second support assembly which in turn transmits its load through direct contact with an activator element which, due to the configuration that it may have according to a preferred embodiment, can also be called a crown.

Therefore, when the pin is in the second position, in which the activator element is rotated about the axial direction with respect to its position in the first position, the second support assembly is at least partially housed in at least one housing of the activator element, which allows the sequential movement of said at least one intermediate transmission element and of the first support assembly, such that the pin is not in contact with said first support assembly, being able to then occupy the second position in which it is moved out of the inner volume defined by the casing.

Therefore, the device of the invention allows having a compact device that occupies minimal space, while being highly reliable and lightweight at the same time, assuring the remote retention and deployment of elements and appendages. The device of the invention with a minimum number of elements and a simple arrangement allows optimizing different design variables involved in the behavior and outputs of this device in a simultaneous manner, specifically in relation to volume, degree of technical complexity, cost, precision, reliability, versatility of application and actuation capability, being an optimal solution of compromise concerning said factors. Additionally, the mechanism of the device of the invention allows resolving the force necessary for counteracting the external force which tries to extract the pin by means of the presence of support assemblies and intermediate elements, so the force needed by the actuator to carry out the movement of the activator element decreases.

In this sense, the intermediate transmission element has the dual function of transmitting movement from the first support assembly to the second support assembly when the device changes from the first to the second position, which likewise entails a resolution of forces, and additionally the positioning of elements comprised by each of the support assemblies, so that the movement of activation, i.e., changing from the first to the second position, is of a few degrees, which is achieved with a particular design of the contact surfaces between the intermediate transmission element and each of the support assemblies, as will be described in detail below.

The possibility of the actuator device comprising an actuator made of a shape memory material commonly known as an SMA (shape memory alloy), which can act on the activator element causing it to rotate to change from the first to the second position, for example, by shrinking when heated, thus causing the rotation necessary to change from the first to the second position, is contemplated.

Said actuator made of SMA material allows the device of the invention to operate at high temperatures. The use of shape memory alloys in the actuator or starter element of the device allows it to work in a wide range of temperatures and allows its outputs to be adjusted by means of selecting the most suitable alloy. Furthermore, the dimensions and weight of the device as a whole can thus be reduced since said SMA technology has better outputs in terms of force outputs with minimum weight and volume. Furthermore, said alloys are resistant to electromagnetic radiations, so they can be used without any problems in noisy environments. Likewise, unlike electromagnetic solutions, such as motors, shape memory alloys do not generate electromagnetic (EM) noise, so they can be used in clean environments in which radiation is limited. By using an actuator made of a shape memory material SMA, a wide range of movements and force outputs can be obtained in the device as a whole, i.e., in the actuation of the pin, with minimum travel of the actuator which allows starting the device, to change from the first to the second position, and limited energy or force in said actuator.

The possibility of the device comprising a first aligning element located inside the casing comprising at least one hole which allows at least partially housing the first support assembly is contemplated, such that said at least one hole of the first aligning element allows the guided movement of the first support assembly.

In this sense, the device comprising a second aligning element located inside the casing, comprising at least one hole which allows at least partially housing the second support assembly is also contemplated, such that said at least one hole of the second aligning element allows the guided movement of the second support assembly.

The aligning elements allow the movement performed by the support assemblies to be much more precise and impact-free, i.e., much smoother, therefore gaining time, reducing noise and preventing premature wear due to the elements impacting against one another when the device goes from the first position to the second position.

The contact area of the pin with the first support assembly having a curved configuration allowing said pin to be aligned in the first position according to a misaligned axial direction rotated not more than 3° with respect to the axial direction is also contemplated, such that the pin can change from the first to the second position, remaining aligned according to the misaligned axial direction. This allows achieving great versatility when using and placing the device on board since the number of directions in which the device can be used increases, even if the fixed position of the casing cannot be modified for reasons of space.

In any case, the device of the invention involves an improvement with respect to actuators existing today in the sense that it does not incorporate complex elements or parts, which allows reducing weight without increasing manufacturing complexity, all this in virtue of the simplicity of its operation. Furthermore, the device does not require special attention during handling and storage since it does not comprise potentially hazardous elements, so it can be stored in normal conditions for long periods. Unlike pyrotechnical devices, the device of the invention is completely reusable without having to be disassembled, only an additional action, which can be manual or automated with another device, being required to reassemble the device with the pin in the first position, which makes testing and rearmament operations considerably easier and less expensive.

### Description of the Drawings

To complement the description that is being made and for the purpose of aiding to better understand the features of the invention according to a preferred practical embodiment thereof, a set of drawings is attached as an integral part of said description wherein the following has been depicted with an illustrative and non-limiting character:

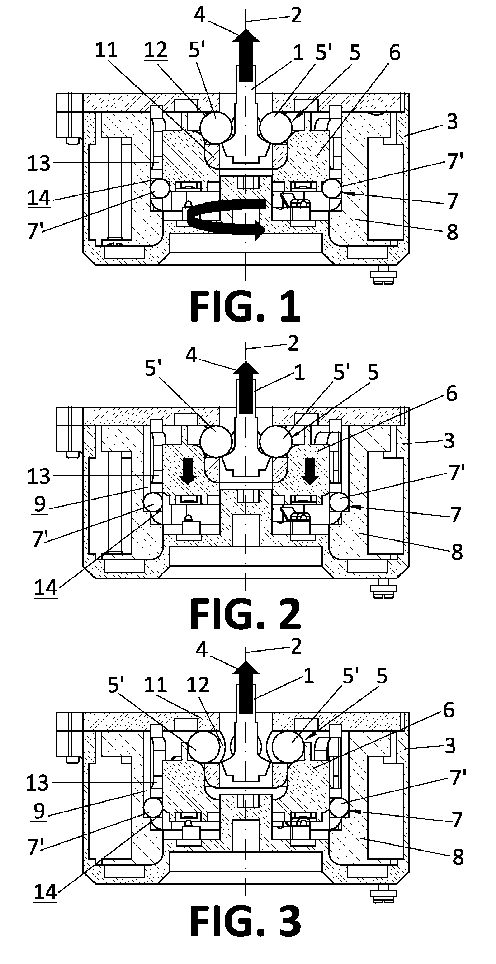

Figure 1 shows a longitudinal section of a first embodiment of the device of the invention, with a nominal force of 2.5 kN, in which each support assembly has only first spherical elements, the device being depicted in the first position, in which the pin remains in its position through the direct contact with the first support assembly. The action exerted by the external force acting on the pin is also schematically depicted by means of a straight arrow, and the direction in which the activator element must rotate in a subsequent phase of the sequence of changing from the first to the second position of the device is schematically depicted by means of a curved arrow.
Figure 2 shows a phase following the phase depicted in Figure 1 in the sequence of changing from the first to the second position, in which the activator element has rotated allowing the first spherical elements of the second support assembly to be housed in the housings of the activator element itself, such that said second support assembly no longer contacts with the intermediate transmission element, allowing the downward movement thereof, as depicted with the arrows, although it is depicted in an instant prior to the downward movement thereof, so the first support assembly still remains in direct contact with the pin.
Figure 3 shows the embodiment of the device depicted in Figures 1 and 2 already in the second position, i.e., in a phase following the phase shown in Figure 2, where the intermediate transmission element has already moved down, such that the first support assembly is withdrawn and no longer contacts with the pin, allowing it to occupy the second position; however, to better view the situation of the elements, the pin is depicted in an instant prior to the movement thereof from the first position.

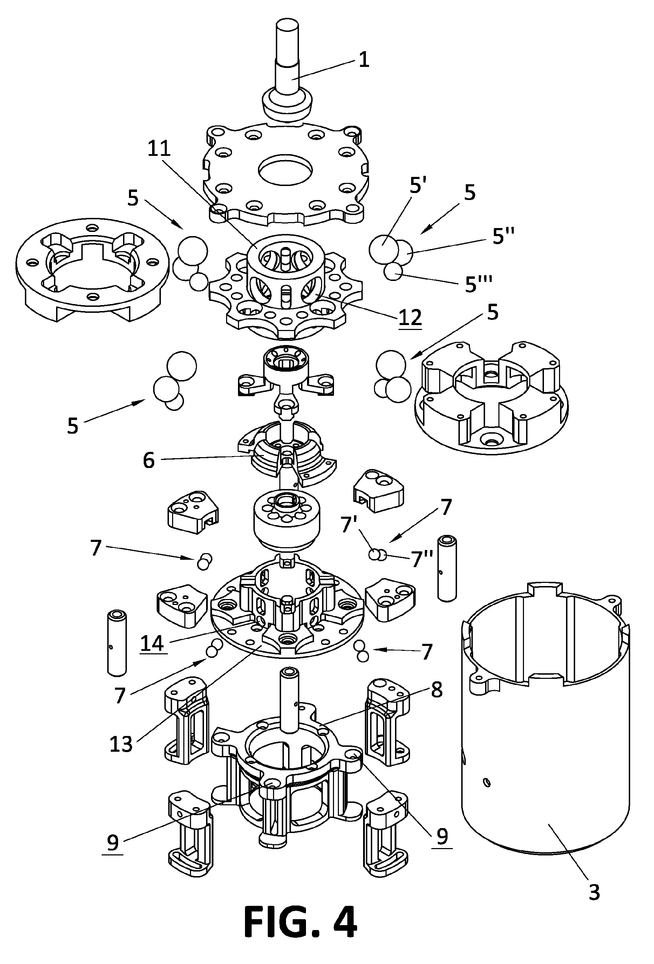

Figure 4 shows an exploded schematic view of the elements of a fourth embodiment of the actuator device of the invention with a nominal force of 15 kN, in which the first support assembly has first, second and third spherical elements and the second support assembly has first and second spherical elements.

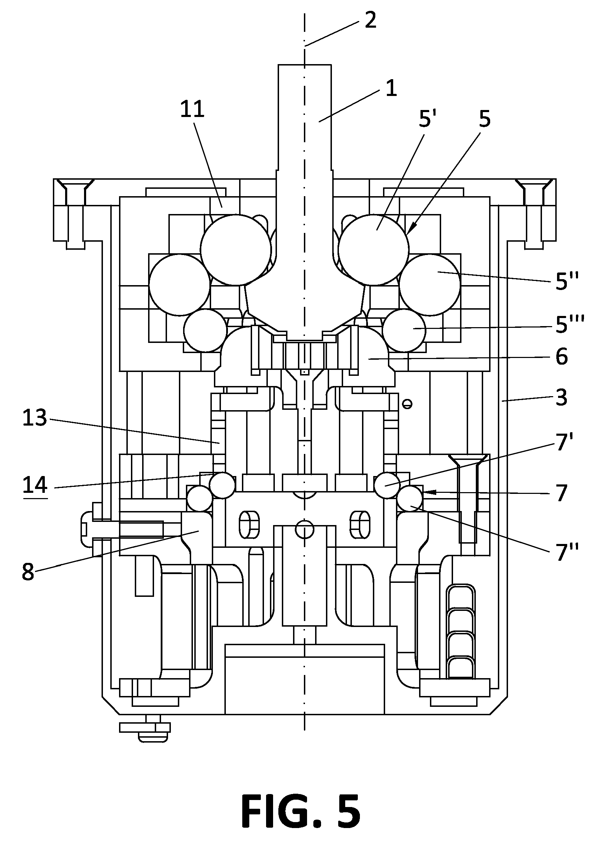

Figure 5 shows a longitudinal section of the fourth embodiment depicted in Figure 4 in the first position.

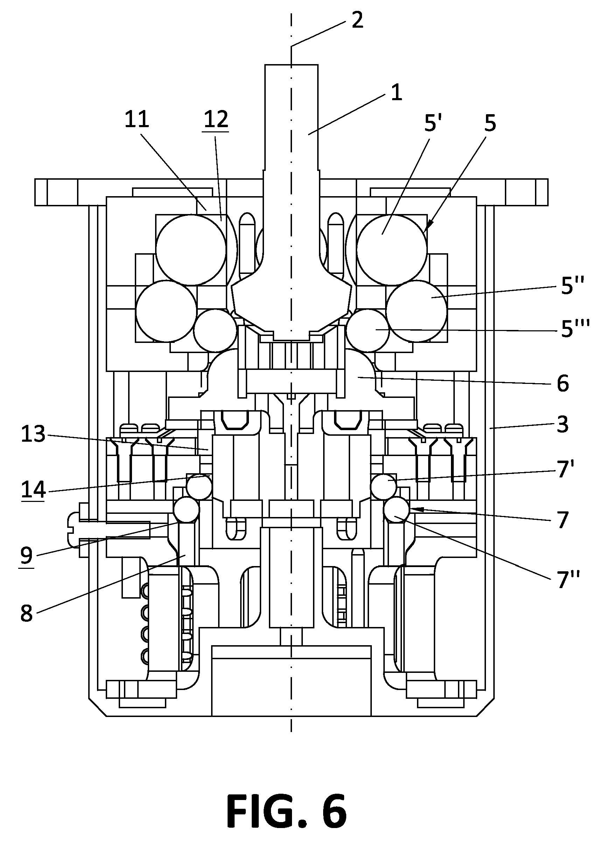

Figure 6 shows a longitudinal section of the fourth embodiment depicted in Figures 4 and 5 in the second position, where only the pin is depicted in an instant prior to the movement thereof from the first position.

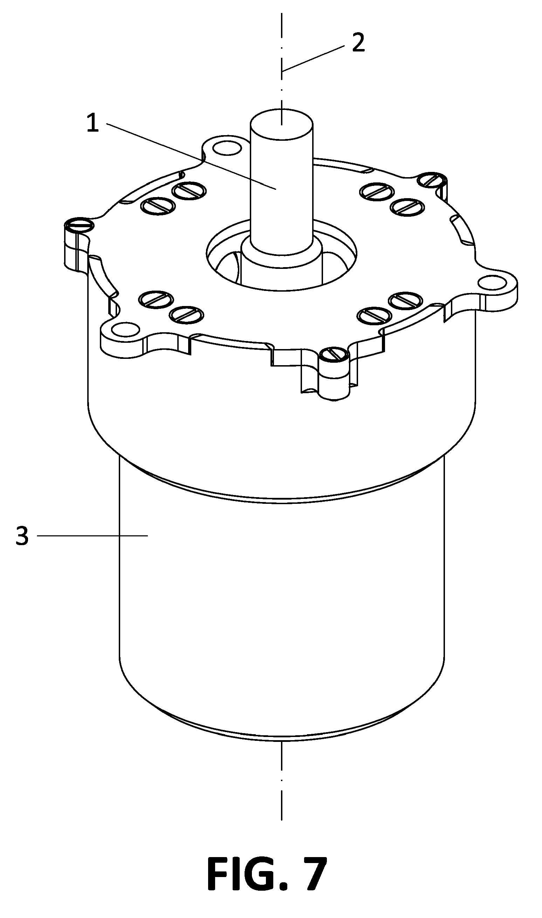

Figure 7 shows a schematic perspective view of the fourth embodiment of the device depicted in Figures 4 to 6, including the assembled casing.

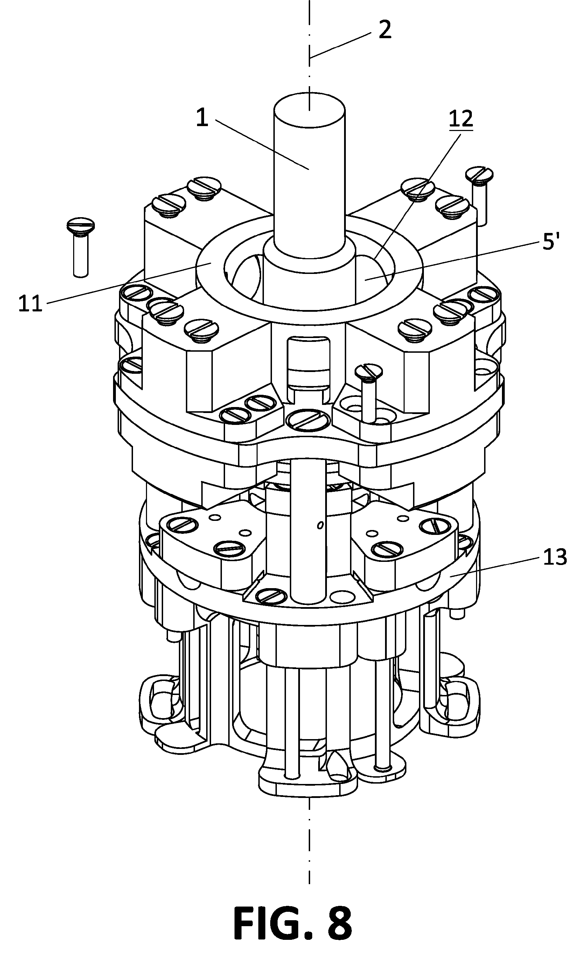

Figure 8 shows a schematic perspective view of the fourth embodiment of the device depicted in Figures 4 to 7, without the casing, to better view the already assembled inner elements.

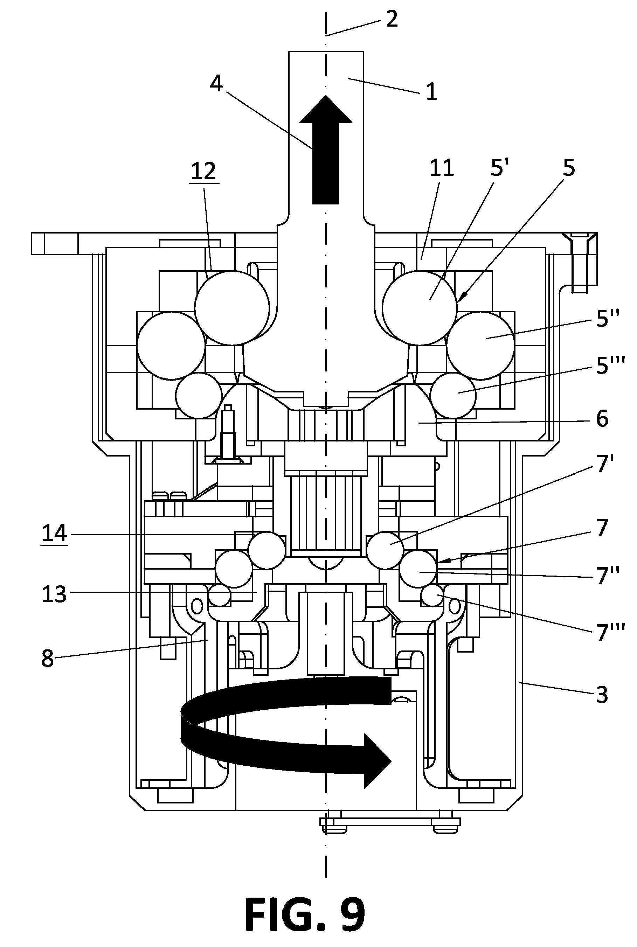

Figure 9 shows a longitudinal section of a sixth embodiment of the device of the invention with a nominal force of 35 kN, although a fifth embodiment of 25 kN would be equivalent in terms of the number of spherical elements that each support assembly would comprise; each of which support assemblies has first, second and third spherical elements, the device being depicted in the first position and the action exerted by the external force acting on the pin being depicted by means of a straight arrow, and the direction in which the activator element must rotate in a subsequent phase of the sequence of changing from the first to the second position of the device being depicted by means of a curved arrow.

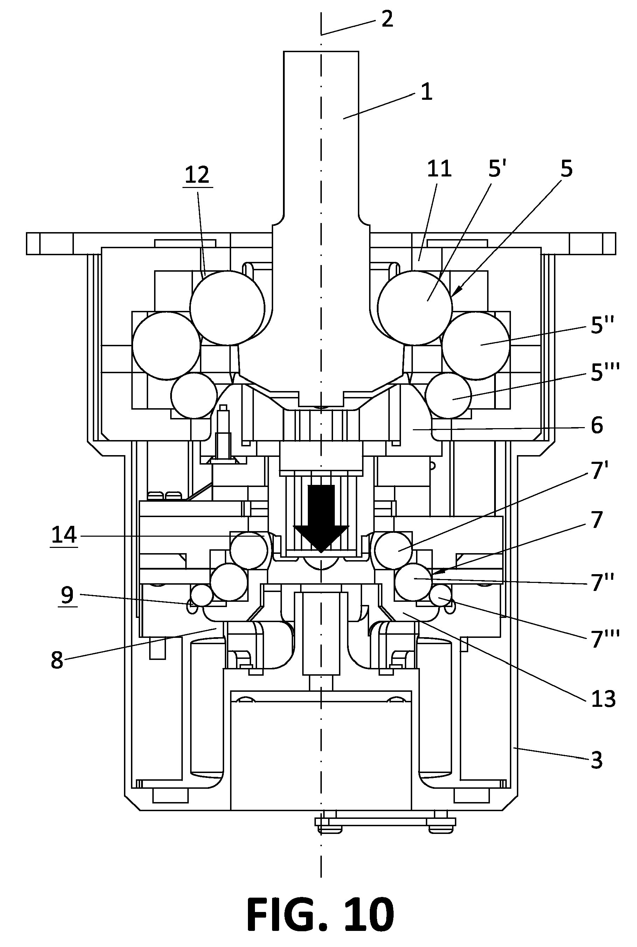

Figure 10 shows a phase following the phase depicted in Figure 9 in the sequence of changing from the first to the second position, in which the activator element has rotated allowing the third spherical elements of the second support assembly to be housed in the housings of the activator element itself, such that said second support assembly no longer contacts with the intermediate transmission element, allowing the downward movement thereof, as depicted with an arrow, although it is depicted in an instant prior to the downward movement thereof, so the first support assembly still remains in direct contact with the pin.

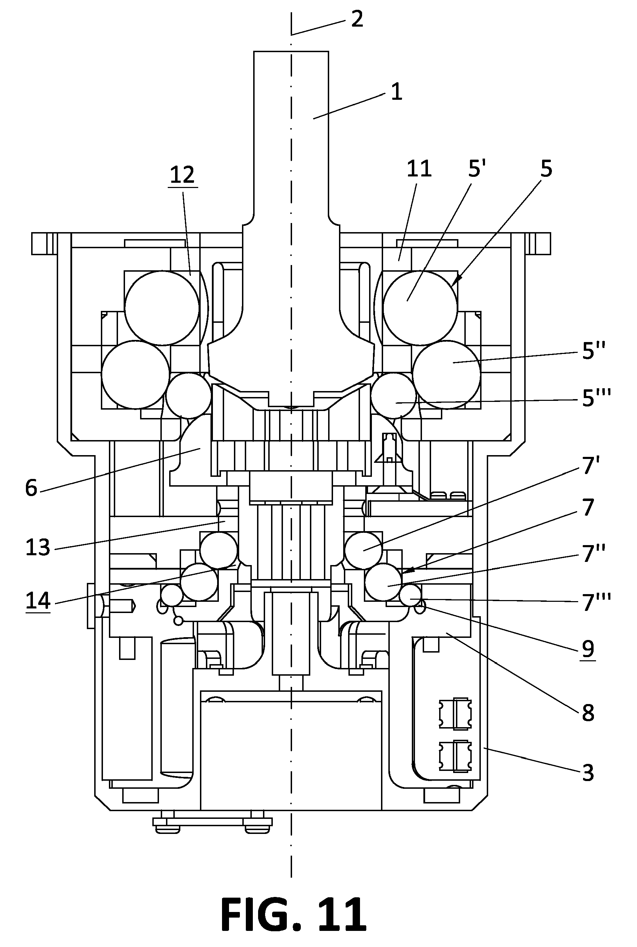

Figure 11 shows the embodiment of the device depicted in Figures 9 and 10 now in the second position, i.e., in a phase following the phase shown in Figure 10, where the intermediate transmission element has already moved down, such that the first support assembly is withdrawn and no longer contacts with the pin, allowing it to occupy the second position; however, to better view the situation of the elements, the pin is depicted in an instant prior to the movement thereof from the first position.

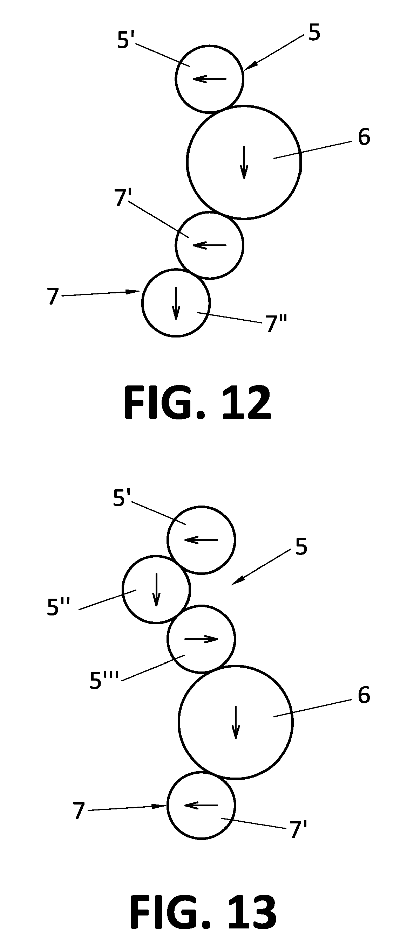

Figure 12 schematically shows a longitudinal section in which the arrangement of the intermediate transmission element and the support assemblies of a second embodiment of the device, with a nominal force of 5 kN, depicted in the first position, can be seen, where the first support assembly has only first spherical elements, and the second support assembly has first and second spherical elements; the direction in which said elements move from the first to the second position is also shown.
Figure 13 shows a longitudinal section, like that of Figure 12, of a third embodiment of the device with a nominal force of 10 kN, also in the first position, where the first support assembly has first, second and third spherical elements, whereas the second support assembly has only first spherical elements.

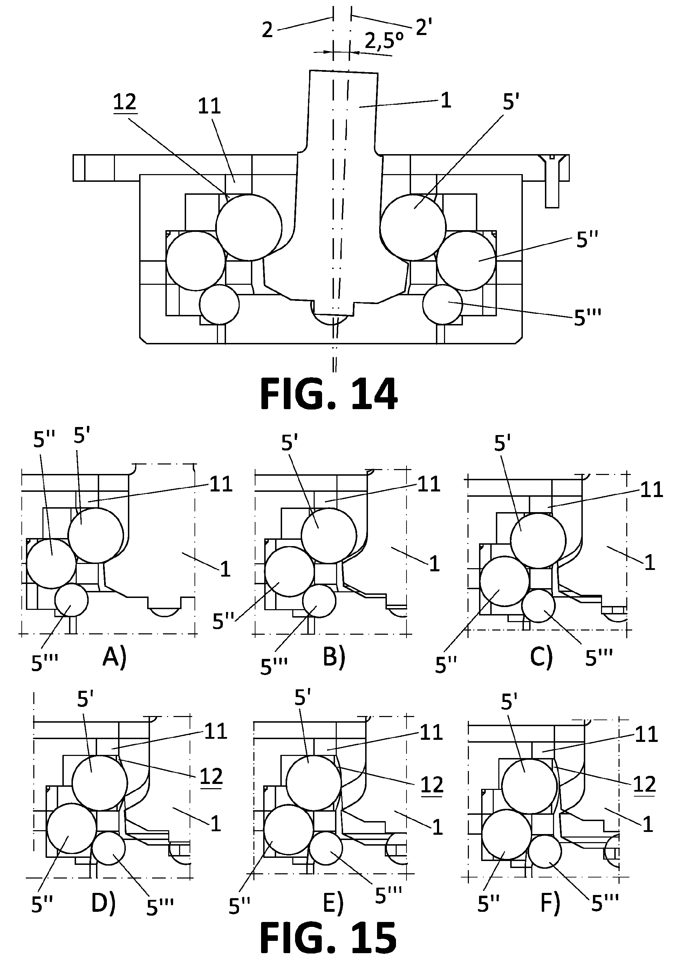

Figure 14 shows a longitudinal section of the area corresponding to the contact between the first support assembly and the pin, in the case depicted for the third to sixth embodiments the first support assembly of which has first, second and third spherical elements, showing the contact between the first spherical elements of the first support assembly with a curved area of the pin in the first position, which allows the pin to be oriented in said first position according to a misaligned axial direction with respect to the axial direction by virtue of said curved area, such that the pin remains aligned with said misaligned axial direction when it moves from the first to the second position.
Figure 15 shows six schematic views of a detail of the embodiments depicted in Figure 14, in which changing from the first to the second position is depicted for a case in which the pin is aligned with the axial direction when it is in the first position, Figures 15A to 15F showing the sequential downward movement of the intermediate transmission element, as well as that of the third, second and first spherical elements, and showing how said movement gradually allows the progressive movement of the pin to occupy the second position, the pin remaining aligned with the axial direction in said movement from the first to the second position.

### Preferred Embodiment of the Invention

In view of the described drawings, it can be observed how in all the possible embodiments of the invention, the linear actuator device proposed by the invention comprises a pin (1) that can move according to an axial direction (2) with respect to a casing (3) in which an inner volume is defined. According to a preferred embodiment, the casing (3), as shown in the drawings, particularly in Figures 4 and 7, has a cylindrical configuration, housing all the elements of the device, with the exception of the pin (1) which is only is partially housed; likewise, said casing (3) is closed in the lower portion by means of a bottom and in the upper portion by means of a cover, which is preferably removable to enable accessing the inside of the device. The axial direction (2) is perpendicular to said cover of the casing (3) or parallel to the generatrix of its cylindrical body.

The pin (1) can move between a first position, in which it is at least partially housed in the casing (3), as shown in Figure 1, for example, and a second position, in which it is moved out of the casing (3) with respect to its position in the first position by the action of an external force (4) acting on the pin (1), when the device is in both the first and second positions.

According to the invention, while the pin (1) is actuated by the external force (4) that tries to move it to the second position, it remains in the first position through the direct contact between said pin (1) and a first support assembly (5) which transmits its load through direct contact with an intermediate transmission element (6). Said intermediate transmission element (6) in turn transmits its load through direct contact with a second support assembly (7) which in turn transmits its load through direct contact with an activator element (8) which, due to the configuration that it may have according to a preferred embodiment, can also be called a crown, and it is located in the lower portion.

Therefore, to start changing from the first to the second position, the activator element (8) is rotated about the axial direction (2) with respect to its position in the first position, such that the second support assembly (7) is at least partially housed in at least one housing (9) of the activator element (8), which allows the sequential movement of the intermediate transmission element (6) and, accordingly, the first support assembly (5), such that the pin (1) is no longer in contact with said first support assembly (5), being able to then occupy the second position in which it is moved out of the inner volume defined by the casing (3).

This sequence of movements for changing from the first to the second position is illustrated in Figure 15, showing six schematic views of a detail of a series of embodiments of the invention, in which the first support assembly (5) has a first spherical element (5'), a second spherical element (5") and a third spherical element (5"'). Said Figure 15 depicts changing from the first to the second position for a case in which the pin (1) is aligned with the axial direction (2) when it is in the first position, Figures 15A to 15F showing the sequential movement of the spherical elements (5', 5", 5"') once the downward movement of the intermediate transmission element (6), which is not depicted, and of the third spherical element (5"'), second spherical element (5") and first spherical element (5') of the first support assembly (5), has started, and how said movement gradually allows the progressive movement of the pin (1) to occupy the second position, the pin (1) remaining aligned with the axial direction (2) in said movement from the first to the second position. As seen in Figure 15A, the third spherical element (5"') is in contact with the second spherical element (5"), whereas the first spherical element (5') is in contact with the pin (1) and with the second spherical element (5"). Therefore the movement of the intermediate transmission element (6), which is not depicted, finally triggers the release of the pin (1), which is no longer in direct contact with the first spherical element (5') of the first support assembly (5) in the second position depicted in Figure 15F. The sequence of movements, which has not been depicted in this Figure 15 but in other drawings that will be described below, performed by the elements (7', 7", 7"') forming the second support assembly (7) with respect to the intermediate transmission element (6) once the activator element (8) is rotated, is equivalent to that described for the first support assembly (5).

Therefore, as deduced from the preceding description, the intermediate transmission element (6) has the dual function of transmitting movement from first support assembly (5) to the second support assembly (7) when the device changes from the first to the second position, which likewise entails a resolution of forces, and additionally the positioning of the spherical elements (5', 5", 5"', 7', 7", 7"') comprised by each of the support assemblies (5, 7), so that the movement of activation, i.e., changing from the first to the second position, is of a few degrees, which is achieved with a particular design of the contact surfaces between the intermediate transmission element (6) and each of the support assemblies (5, 7), as can be seen in the drawings.

The possibility of the actuator device comprising an actuator made of a shape memory material commonly known as SMA (shape memory alloy), which can act on the activator element (8) causing it to rotate to change from the first to the second position, for example, by shrinking when heated, thus causing the rotation necessary to change from the first to the second position, is contemplated.

Figures 1 to 3 show a first embodiment of the linear actuator device with a nominal force of 2.5 kN, in which the first support assembly (5) comprises at least one first spherical element (5') which remains in direct contact with said at least one intermediate transmission element (6) in both the first and second positions, and in which the second support assembly (7) comprises at least one first spherical element (7') which remains in direct contact with the activator element (8) and with the intermediate transmission element (6) in both the first and second positions. Therefore, in this embodiment each support assembly (5, 7) has only first spherical elements (5', 7').

Figure 1 depicts the device in the first position, in which the pin (1) remains in its position through the direct contact with the first support assembly (5); likewise, the action exerted by the external force (4) acting on the pin (1) is schematically depicted by means of a straight arrow, and the direction in which the activator element (8) must rotate in a subsequent phase of the sequence of changing from the first to the second position of the device is schematically depicted by means of a curved arrow. Figure 2 shows a phase following the phase depicted in Figure 1 in the sequence of changing from the first to the second position, in which the activator element (8) has rotated allowing the first spherical elements (7') of the second support assembly (7) to be housed in the housings (9) of the activator element (8) itself, such that said second support assembly (7) no longer contacts with the intermediate transmission element (6), allowing the downward movement thereof, as depicted with the arrows, although it is depicted in an instant prior to the downward movement thereof, so the first support assembly (5) still remains in direct contact with the pin (1). Figure 3 shows the device now in the second position, i.e., in a phase following the phase shown in Figure 2, where the intermediate transmission element (6) has already moved down, such that the first support assembly (5) is withdrawn and no longer contacts with the pin (1), allowing it to occupy the second position; however, to better view the situation of the elements, the pin (1) is depicted in an instant prior to the movement thereof from the first position.

Figure 12 schematically shows a longitudinal section in which the arrangement of the intermediate transmission element (6) and the support assemblies (5, 7) of a second embodiment of the device with a nominal force of 5 kN, depicted in the first position, can be seen. According to said second embodiment, the second support assembly (7) comprises at least one first spherical element (7') which remains in direct contact with said at least one intermediate transmission element (6) and with at least one second spherical element (7") in both the first and second positions, whereas said at least one second spherical element (7") remains in direct contact with said at least one first spherical element (7') and with the activator element (8) in both the first and second positions. The first support assembly (5) in turn has only first spherical elements (5'). Likewise, the direction in which said elements (5, 6, 7) move from the first to the second position is also shown in the drawing.

Figure 13 schematically shows a longitudinal section, like that of Figure 12, of a third embodiment of the device with a nominal force of 10 kN, also depicted in the first position. According to said third embodiment, the first support assembly (5) comprises at least one first spherical element (5') which remains in direct contact with the pin (1) in the first position and with at least one second spherical element (5") in both the first and second positions. Said at least one second spherical element (5") in turn remains in direct contact with said at least one first spherical element (5') and with at least one third spherical element (5"') in both the first and second positions, whereas said at least one third spherical element (5"') remains in direct contact with said at least one second spherical element (5") and with said at least one intermediate transmission element (6) in both the first and second positions. On the other hand, the second support assembly (7) has only first spherical elements (7').

As can be deduced from the foregoing, the number of spherical elements (5', 5", 5"', 7', 7", 7"') comprised by each support assembly (5, 7) in each embodiment of the device of the invention is directly related to the nominal force required of the device and to the necessary distribution of forces based on a specific external force (4).

Figures 4 to 7 show a fourth embodiment of the actuator device of the invention with a nominal force of 15 kN, in which the second support assembly (7) comprises at least one first spherical element (7') which remains in direct contact with said at least one intermediate transmission element (6) and with at least one second spherical element (7") in both the first and second positions, whereas said at least one second spherical element (7") remains in direct contact with said at least one first spherical element (7') and with the activator element (8) in both the first and second positions. Figure 5 shows a longitudinal section of this fourth embodiment depicted in the first position. Figure 6 shows the second position, where only the pin (1) is depicted in an instant prior to the movement thereof from the first position.

Figures 9 to 11 show a sixth embodiment of the device of the invention with a nominal force of 35 kN, although a fifth embodiment of 25 kN would be equivalent in terms of the number of spherical elements (5', 5", 5"', 7', 7", 7"') that each support assembly (5, 7) would comprise, these being two of the most complex embodiments envisaged for the device of the invention, where the second support assembly (7) comprises at least one first spherical element (7') which remains in direct contact with said at least one intermediate transmission element (6) and with at least one second spherical element (7") in both the first and second positions, whereas said at least one second spherical element (7") remains in direct contact with said at least one first spherical element (7') and with at least one third spherical element (7"') in both the first and second positions, whereas said at least one third spherical element (7"') remains in direct contact with said at least one second spherical element (7") and with the activator element (8) in both the first and second positions.

Figure 9 depicts the device in the first position, and the action exerted by the external force (4) acting on the pin (1) is depicted by means of a straight arrow, and the direction in which the activator element (8) must rotate in a subsequent phase of the sequence of changing from the first to the second position of the device is depicted by means of a curved arrow. Figure 10 shows a phase following the phase depicted in Figure 9 in the sequence of changing from the first to the second position, in which the activator element (8) has rotated allowing the third spherical elements (7"') of the second support assembly (7) to be housed in the housings (9) of the activator element (8) itself, such that said second support assembly (7) no longer contacts with the intermediate transmission element (6), allowing the downward movement thereof, as depicted with an arrow, although it is depicted in an instant prior to the downward movement thereof, so the first support assembly (5) still remains in direct contact with the pin (1). Figure 11 shows the device now in the second position, i.e., in a phase following the phase shown in Figure 10, where the intermediate transmission element (6) has already moved down, such that the first support assembly (5) is withdrawn and no longer contacts with the pin (1), allowing it to occupy the second position; however, to better view the situation of the elements, the pin (1) is depicted in an instant prior to the movement thereof from the first position.

The possibility of the device comprising a first aligning element (11) located inside the casing (3), comprising at least one hole (12) which allows at least partially housing the first support assembly (5) is contemplated, such that said at least one hole (12) of the first aligning element (11) allows the guided movement of the first support assembly (5).

In this sense, the device comprising a second aligning element (13) located inside the casing (3), comprising at least one hole (14) which allows at least partially housing the second support assembly (7) is also contemplated, such that said at least one hole (14) of the second aligning element (13) allows the guided movement of the second support assembly (7).

Figure 14 in turn shows a longitudinal section of the area corresponding to the contact between the first support assembly (5) and the pin (1), in the case depicted for the third to sixth embodiments the first support assembly (5) of which has a first spherical element (5'), a second spherical element (5") and a third spherical element (5"'). The drawing shows that the contact area of the pin (1) with the first support assembly (5) has a curved configuration allowing said pin (1) to be aligned in the first position according to a misaligned axial direction (2') rotated not more than 3° with respect to the axial direction (2), such that the pin (1) can change from the first to the second position, remaining aligned according to the misaligned axial direction (2'). This allows achieving great versatility when using and placing the device on board since the number of directions in which the device can be used increases, even if the fixed position of the casing (3) cannot be modified for reasons of space. The drawing shows the contact between the first spherical elements (5') of the first support assembly (5) with a curved area of the pin (1) in the first position, which allows the pin (1) to be oriented in said first position according to a misaligned axial direction (2') with respect to the axial direction (2) by virtue of said curved area, such that the pin (1) remains aligned with said misaligned axial direction (2') when it moves from the first to the second position.

In view of this description and set of drawings, the person skilled in the art will understand that the embodiments of the invention which have been described can be combined in many ways within the object of the invention. The invention has been described according to several preferred embodiments thereof, but for the person skilled in the art it will be evident that multiple variations can be introduced in said preferred embodiments without exceeding the object of the claimed invention.

## Claims

1. Linear actuator device comprising a pin (1) that can be moved according to an axial direction (2) with respect to a casing (3) between a first position, in which it is at least partially housed in the casing (3), and a second position, in which it is moved out of the casing (3) with respect to its position in the first position by the action of an external force (4) acting on the pin (1), the pin (1) remaining in the first position through the direct contact between said pin (1) and a first support assembly (5) which transmits its load through direct contact with at least one intermediate transmission element (6) which in turn transmits its load through direct contact with a second support assembly (7) which in turn transmits its load through direct contact with an activator element (8); the pin (1) being able to be in the second position, in which the activator element (8) is rotated about the axial direction (2) with respect to its position in the first position, such that the second support assembly (7) is at least partially housed in at least one housing (9) of the activator element (8), allowing the sequential movement of said at least one intermediate transmission element (6) and of the first support assembly (5), such that the pin (1) is not in contact with said first support assembly (5) whereby the first support assembly (5) comprises at least one first spherical element (5') which remains in direct contact with said at least one intermediate transmission element (6) in both the first and second positions, and wherein the second support assembly (7) comprises at least one first spherical element (7') which remains in direct contact with the activator element (8) and with said at least one intermediate transmission element (6) in both the first and second positions, **characterised in that** the at least one first spherical element (7') of the second support assembly (7) further remains in contact with at least one second spherical element (7") in both the first and second positions, whereas said at least one second spherical element (7") remains in direct contact with said at least one first spherical element (7') of the second support assembly (7) J and with the activator element (8) in both the first and second positions.

2. Linear actuator device according to claim 1, comprising an actuator made of a shape memory material that can act on activator element (8) causing it to rotate from the first to the second position.

3. Linear actuator device according to claim 1, wherein said at least one spherical element (5') of the first support assembly (5) remains in direct contact with the pin (1) in the first position and with at least one second spherical element (5") in both the first and second positions, whereas said at least one second spherical element (5") remains in direct contact with said at least one first spherical element (5') and with at least one third spherical element (5"') in both the first and second positions, whereas said at least one third spherical element (5"') remains in direct contact with said at least one second spherical element (5") and with said at least one intermediate transmission element (6) in both the first and second positions.

4. Linear actuator device according to claim 3, wherein said at least one spherical element (7') of the second support assembly (7) remains in direct contact with said at least one intermediate transmission element (6) and with at least one second spherical element (7") in both the first and second positions, whereas said at least one second spherical element (7") remains in direct contact with said at least one first spherical element (7') and with the activator element (8) in both the first and second positions.

5. Linear actuator device according to any of claims 3 and 4, wherein said at least one first spherical element (7') of the second support assembly (7) remains in direct contact with said at least one intermediate transmission element (6) and with at least one second spherical element (7") in both the first and second positions, whereas said at least one second spherical element (7") remains in direct contact with said at least one first spherical element (7') and with at least one third spherical element (7"') in both the first and second positions, whereas said at least one third spherical element (7"') remains in direct contact with said at least one second spherical element (7") and with the activator element (8) in both the first and second positions.

6. Linear actuator device according to any of the preceding claims, comprising a first aligning element (11) located inside the casing (3), comprising at least one hole (12) which allows at least partially housing the first support assembly (5), such that said at least one hole (12) of the first aligning element (11) allows the guided movement of the first support assembly (5).

7. Linear actuator device according to any of the preceding claims, comprising a second aligning element (13) located inside the casing (3), comprising at least one hole (14) which allows at least partially housing the second support assembly (7), such that said at least one hole (14) of the second aligning element (13) allows the guided movement of the second support assembly (7).

8. Linear actuator device according to any of the preceding claims, wherein the contact area of the pin (1) with the first support assembly (5) has a curved configuration allowing said pin (1) to be aligned in the first position according to a misaligned axial direction (2') rotated not more than 3° with respect to the axial direction (2), such that the pin (1) can change from the first to the second position, remaining aligned according to the misaligned axial direction (2').

## Patentansprüche

1. Linearbetätigungsvorrichtung, umfassend einen Bolzen (1), der gemäß einer axialen Richtung (2) in Bezug auf ein Gehäuse (3) zwischen einer ersten Position, in welcher er zumindest teilweise in dem Gehäuse (3) untergebracht ist, und einer zweiten Position, in welcher er durch die Wirkung einer externen Kraft (4), die auf den Bolzen (1) wirkt, in Bezug auf seine Position in der ersten Position aus dem Gehäuse (3) herausbewegt ist, bewegt werden kann, wobei der Bolzen (1) in der ersten Position durch den direkten Kontakt zwischen dem Bolzen (1) und einer ersten Stützanordnung (5), die ihre Ladung durch direkten Kontakt mit zumindest einem Zwischenübertragungselement (6) überträgt, das wiederum seine Ladung durch direkten Kontakt mit einer zweiten Stützanordnung (7) überträgt, die wiederum ihre Ladung durch direkten Kontakt mit einem Aktivierungselement (8) überträgt, verbleibt; wobei der Bolzen (1) in der Lage ist, in der zweiten Position zu sein, in welcher das Aktivierungselement (8) in Bezug auf seine Position in der ersten Position um die axiale Richtung (2) gedreht ist, sodass die zweite Stützanordnung (7) zumindest teilweise in zumindest einem Gehäuse (9) des Aktivierungselements (8) untergebracht ist, wodurch die sequenzielle Bewegung des zumindest einen Zwischenübertragungselements (6) und der ersten Stützanordnung (5) ermöglicht wird, sodass der Bolzen (1) nicht in Kontakt mit der ersten Stützanordnung (5) steht, wobei die erste Stützanordnung (5) zumindest ein erstes sphärisches Element (5') umfasst, das in sowohl der ersten als auch der zweiten Position in direktem Kontakt mit dem zumindest einen Zwischenübertragungselement (6) verbleibt, und wobei die zweite Stützanordnung (7) zumindest ein erstes sphärisches Element (7') umfasst, das in sowohl der ersten als auch der zweiten Position in direktem Kontakt mit dem Aktivierungselement (8) und mit dem zumindest einen Zwischenübertragungselement (6) verbleibt, **dadurch gekennzeichnet, dass** das zumindest eine sphärische Element (7') der zweiten Stützanordnung (7) in sowohl der ersten als auch der zweiten Position des Weiteren in Kontakt mit zumindest einem zweiten sphärischen Element (7") verbleibt, wohingegen das zumindest eine zweite sphärische Element (7") in sowohl der ersten als auch der zweiten Position in direktem Kontakt mit dem zumindest einen sphärischen Element (7') der zweiten Stützanordnung (7) und mit dem Aktivierungselement (8) verbleibt.

2. Linearbetätigungsvorrichtung nach Anspruch 1, umfassend einen Aktuator, der aus einem Formgedächtnismaterial gemacht ist, der auf das Aktivierungselement (8) wirken kann, um zu bewirken, dass sich dieses von der ersten zu der zweiten Position dreht.

3. Linearbetätigungsvorrichtung nach Anspruch 1, wobei das zumindest eine sphärische Element (5') der ersten Stützanordnung (5) in der ersten Position in direktem Kontakt mit dem Bolzen (1) und in sowohl der ersten als auch der zweiten Position mit zumindest einem zweiten sphärischen Element (5") verbleibt, wohingegen das zumindest eine zweite sphärische Element (5") in sowohl der ersten als auch der zweiten Position in direktem Kontakt mit dem zumindest einen ersten sphärischen Element (5') und mit zumindest einem dritten sphärischen Element (5"') verbleibt, wohingegen das zumindest eine dritte sphärische Element (5"') in sowohl der ersten als auch der zweiten Position in direktem Kontakt mit dem zumindest einen zweiten sphärischen Element (5") und mit dem zumindest einen Zwischenübertragungselement (6) verbleibt.

4. Linearbetätigungsvorrichtung nach Anspruch 3, wobei das zumindest eine sphärische Element (7') der zweiten Stützanordnung (7) in sowohl der ersten als auch der zweiten Position in direktem Kontakt mit dem zumindest einen Zwischenübertragungselement (6) und mit zumindest einem zweiten sphärischen Element (7") verbleibt, wohingegen das zumindest eine zweite sphärische Element (7") in sowohl der ersten als auch der zweiten Position in direktem Kontakt mit dem zumindest einen ersten sphärischen Element (7') und mit dem Aktivierungselement (8) verbleibt.

5. Linearbetätigungsvorrichtung nach einem der Ansprüche 3 und 4, wobei das zumindest eine erste sphärische Element (7') der zweiten Stützanordnung (7) in sowohl der ersten als auch der zweiten Position in direktem Kontakt mit dem zumindest einen Zwischenübertragungselement (6) und mit zumindest einem zweiten sphärischen Element (7") verbleibt, wohingegen das zumindest eine zweite sphärische Element (7") in sowohl der ersten als auch der zweiten Position in direktem Kontakt mit dem zumindest einen ersten sphärischen Element (7') und mit zumindest einem dritten sphärischen Element (7"') verbleibt, wohingegen das zumindest eine dritte sphärische Element (7"') in sowohl der ersten als auch der zweiten Position in direktem Kontakt mit dem zumindest einen zweiten sphärischen Element (7") und mit dem Aktivierungselement (8) verbleibt.

6. Linearbetätigungsvorrichtung nach einem der vorangegangenen Ansprüche, umfassend ein erstes Ausrichtungselement (11), das im Inneren des Gehäuses (3) angeordnet ist, umfassend zumindest ein Loch (12), das es ermöglicht, die erste Stützanordnung (5) zumindest teilweise unterzubringen, sodass das zumindest eine Loch (12) des ersten Ausrichtungselements (11) die geführte Bewegung der ersten Stützanordnung (5) ermöglicht.

7. Linearbetätigungsvorrichtung nach einem der vorangegangenen Ansprüche, umfassend ein zweites Ausrichtungselement (13), das im Inneren des Gehäuses (3) angeordnet ist, umfassend zumindest ein Loch (14), das es ermöglicht, die zweite Stützanordnung (7) zumindest teilweise unterzubringen, sodass das zumindest eine Loch (14) des zweiten Ausrichtungselements (13) die geführte Bewegung der zweiten Stützanordnung (7) ermöglicht.

8. Linearbetätigungsvorrichtung nach einem der vorangegangenen Ansprüche, wobei der Kontaktbereich des Bolzens (1) mit der ersten Stützanordnung (5) eine gekrümmte Konfiguration aufweist, die es ermöglicht, dass der Bolzen (1) in der ersten Position gemäß einer fehlausgerichteten axialen Richtung (2'), die um nicht mehr als 3° in Bezug auf die axiale Richtung (2) rotiert ist, ausgerichtet ist, sodass der Bolzen (1) von der ersten zu der zweiten Position wechseln kann, wobei er gemäß der fehlausgerichteten axialen Richtung (2') ausgerichtet bleibt.

## Revendications

1. Dispositif actionneur linéaire comprenant une broche (1) qui peut être déplacée en fonction d'une direction axiale (2) par rapport à un carter (3) entre une première position, dans laquelle il est au moins partiellement abrité dans le carter (3), et une deuxième position, dans laquelle il est déplacé hors du carter (3) par rapport à sa position dans la première position grâce à l'action d'une force externe (4) agissant sur la broche (1), la broche (1) restant dans la première position en vertu du contact direct entre ladite broche (1) et un premier ensemble support (5) qui transmet sa charge en vertu d'un contact direct avec au moins un élément de transmission intermédiaire (6) qui à son tour transmet sa charge en vertu d'un contact direct avec un deuxième ensemble support (7) qui à son tour transmet sa charge en vertu d'un contact direct avec un élément d'activation (8) ; la broche (1) étant apte à être dans la deuxième position, dans laquelle l'élément d'activation (8) est tourné autour de la direction axiale (2) par rapport à sa position dans la première position, de sorte que le deuxième ensemble support (7) soit au moins partiellement abrité dans au moins un logement (9) de l'élément d'activation (8), permettant le mouvement séquentiel dudit au moins un élément de transmission intermédiaire (6) et du premier ensemble support (5), de sorte que la broche (1) ne soit pas en contact avec ledit premier ensemble support (5) le premier ensemble support (5) comprenant au moins un premier élément sphérique (5') qui reste en contact direct avec ledit au moins un élément de transmission intermédiaire (6) à la fois dans les première et deuxième positions, et dans lequel le deuxième ensemble support (7) comprend au moins un premier élément sphérique (7') qui reste en contact direct avec l'élément d'activation (8) et avec ledit au moins un élément de transmission intermédiaire (6) à la fois dans les première et deuxième positions, **caractérisé en ce que** cet au moins un premier élément sphérique (7') du deuxième ensemble support (7) reste en outre en contact avec au moins un deuxième élément sphérique (7") à la fois dans les première et deuxième positions, alors que ledit au moins un deuxième élément sphérique (7") reste en contact direct avec ledit au moins un premier élément sphérique (7') du deuxième ensemble support (7), et avec l'élément d'activation (8) à la fois dans les première et deuxième positions.

2. Dispositif actionneur linéaire selon la revendication 1, comprenant un actionneur réalisé en une matière à mémoire de forme qui peut agir sur l'élément d'activation (8) pour amener celui-ci à tourner de la première à la deuxième position.

3. Dispositif actionneur linéaire selon la revendication 1, dans lequel ledit au moins un élément sphérique (5') du premier ensemble support (5) reste en contact direct avec la broche (1) dans la première position et avec au moins un deuxième élément sphérique (5") à la fois dans les première et deuxième positions, alors que ledit au moins un deuxième élément sphérique (5") reste en contact direct avec ledit au moins un premier élément sphérique (5') et avec au moins un troisième élément sphérique (5"') à la fois dans les première et deuxième positions, alors que ledit au moins un troisième élément sphérique (5"') reste en contact direct avec ledit au moins un deuxième élément sphérique (5") et avec ledit au moins un élément de transmission intermédiaire (6) à la fois dans les première et deuxième positions.

4. Dispositif actionneur linéaire selon la revendication 3, dans lequel ledit au moins un élément sphérique (7') du deuxième ensemble support (7) reste en contact direct avec ledit au moins un élément de transmission intermédiaire (6) et avec au moins un deuxième élément sphérique (7") à la fois dans les première et deuxième positions, alors que ledit au moins un deuxième élément sphérique (7") reste en contact direct avec ledit au moins un premier élément sphérique (7') et avec l'élément d'activation (8) à fois dans les première et deuxième positions.

5. Dispositif actionneur linéaire selon n'importe lesquelles des revendications 3 et 4, dans lequel ledit au moins un premier élément sphérique (7') du deuxième ensemble support (7) reste en contact direct avec ledit au moins un élément de transmission intermédiaire (6) et avec au moins un deuxième élément sphérique (7") à la fois dans les première et deuxième positions, alors que ledit au moins un deuxième élément sphérique (7") reste en contact direct avec ledit au moins un premier élément sphérique (7') et avec au moins un troisième élément sphérique (7"') à la fois dans les première et deuxième positions, alors que ledit au moins un troisième élément sphérique (7"') reste en contact direct avec ledit au moins un deuxième élément sphérique (7") et avec l'élément d'activation (8) à la fois dans les première et deuxième positions.

6. Dispositif actionneur linéaire selon n'importe lesquelles des revendications précédentes, comprenant un premier élément d'alignement (11) positionné à l'intérieur du carter (3), comprenant au moins un trou (12) qui permet au moins partiellement d'abriter le premier ensemble support (5), de sorte que ledit au moins un trou (12) du premier élément d'alignement (11) permette le mouvement guidé du premier ensemble support (5).

7. Dispositif actionneur linéaire selon n'importe lesquelles des revendications précédentes, comprenant un deuxième élément d'alignement (13) positionné à l'intérieur du carter (3), comprenant au moins un trou (14) qui permet au moins partiellement d'abriter le deuxième ensemble support (7), de sorte que ledit au moins un trou (14) du deuxième élément d'alignement (13) permette le mouvement guidé du deuxième ensemble support (7).

8. Dispositif actionneur linéaire selon n'importe lesquelles des revendications précédentes, dans lequel la zone de contact de la broche (1) avec le premier ensemble support (5) a une configuration incurvée permettant à ladite broche (1) d'être alignée dans la première position en fonction d'une direction axiale mal alignée (2') tournée de pas plus de 3° par rapport à la direction axiale (2), de sorte que la broche (1) puisse changer de la première à la deuxième position, en restant alignée en fonction de la direction axiale mal alignée (2').
